# EUROPEAN PATENT SPECIFICATION

(11) **EP 3 232 805 B1**
(45) Date of publication and mention of the grant of the patent: **24.03.2021**
(21) Application number: 15808422.8
(22) Date of filing: 14.12.2015
(51) Int. Cl.: A23G 9/48

(54) **DUAL LAYER FROZEN CONFECTION**
DOPPELSCHICHTIGES EISKONFEKT
CONFISERIE CONGELÉE À DOUBLE COUCHE

(30) Priority: 19.12.2014 EP 14199132
(43) Date of publication of application: 25.10.2017
(73) Proprietor: Société des Produits Nestlé S.A., 1800 Vevey (CH)
(72) Inventor: LEBLEU, Anne-Cecile, Agnès, 60000 Fouqenies (FR); CORSARO, Pietro Goffredo, 60650 Saint Paul (FR); PREVOST, Loïc, 60370 Hermes (FR); RICCO, Massimilliano, 43123 Parma (IT)
(74) Representative: Lumsden, Stuart Edward Henry
(86) International application number: PCT/EP2015/079594
(87) International publication number: WO 2016/096727

(56) References cited:
- EP-A1- 1 808 080
- WO-A1-2011/086058
- JP-A- 2011 182 765
- US-A- 5 011 704
- US-A1- 2008 317 909

## Description

### Field of the invention

The present invention relates to a frozen confectionery product with a layered structure and to a method for manufacturing the same.

### Background

Various frozen confectionery products containing inclusions or layers of a fat-based coating and sauce exist.

For product with multiple layers of sauce, chocolate and frozen confection the manufacturing of such products are however challenge when a desired shape and esthetically appearance of the product or a décor for a product are sought after. The problem is particular pronounced for premium product where both larger amounts of chocolate and sauces may be wanted while the layers should be defined and have an attractive appearance. For such product simply reducing the amounts of chocolate and sauce is not an option.

EP 2523565 A1 discloses a frozen confectionery product comprising a container and an aerated frozen confection extruded into the container. The product has a plurality of substantially thin chocolate patterns in the aerated frozen confection. The chocolate patterns have the form of one or more helical chocolate layers extending across the height of the container and forming annular parallel chocolate layers. Although this patent application mention the possibility of adding sauce layers to the product it is silent about how this is done when larger amounts or thick layers of sauce or chocolate are present in a product.

The high temperatures of chocolate or sauce being added to the frozen confection may result in a local melting of the frozen confection which again may changes crystal structure and result in larger crystals and more coarse texture. On the other hand the heat transfer to the frozen confection is necessary to solidify the chocolate and sauce and cool down the additions.

Another issue when manufacturing layered frozen confection is that too much of sauce or chocolate provided at the outer parts of the products may result in the sauce or chocolate running down along the outer surface and into packaging material resulting in an outer shells of chocolate or sauce which distort the presentation of the layers and the sensorial experience when eating the product.

There is therefore a need to improve layered products or layered décor including multiple layers such as frozen confection, chocolate and sauce, in particular where larger amounts of chocolate or sauce are used and to provide a nice appearance and accuracy of the product layers while preserving a good texture.

### Object of the invention

It is thus the object of the present invention to provide a method for making frozen confectionery products which overcomes the drawbacks mentioned above. It is furthermore the object of the present invention to provide a novel frozen confectionery product, comprising multiple layers of that are regularly distributed in the product.

### Summary of the invention

It has been found that a controlled thickness, cooling capacity and viscosity of the layers of chocolate, sauce and ice cream are required in order to obtain an esthetically acceptable decoration, a unique design and prevent heat shock of the ice cream.

According to a first aspect, the invention relates to a layered frozen confectionery product comprising at least one a layer of frozen confection, at least one layer of chocolate and at least one layer of sauce wherein the sauce layer has a viscosity of between 1.5 and 1.7 Pa.s and is present in the frozen confectionery at a thickness of 0.5 to 3.0 mm, the chocolate layer has a viscosity of between 1.0 and 1.4 Pa.s at a temperature of +45°C and is present in the frozen confectionery at a thickness of 0.5 to 3.0 mm, and
the frozen confection layer has a thickness of between 3.0 and 7.0 mm and an overrun between 80 and 200 and is positioned between the chocolate and sauce layer, and wherein the frozen confection , sauce and chocolate layers form substantially helical layers, and wherein the sauce is red fruit sauce and the viscosity of the red fruit sauce is measured with a Anton Parr viscometer with a geometry CP.50 at a temperature from 10 to 35°C.

It is preferred that at least two of the layers extending to the edge of the layered frozen confection.

It has been found that a rapid crystallization of the chocolate layer is needed in order to keep the general aspect of the decoration, if the chocolate does not crystalize quickly it will not keep the desired shape. Crystallization of the chocolate layer could be hindered if the chocolate touches a free water source, for example a fruit sauce. It has also been found that a fruit sauce does not crystallize fast but freeze slowly as the water molecules contained in said sauce turn to ice.

Further, it has also been found that if the frozen confection layer e.g. ice cream layer is too thin it will not isolate properly the two sauces, contacts may occur. Moreover a cold transfer is needed from the ice cream to the sauces in order for them to solidify. If the ice cream layer is too thin the contact between the chocolate layer and the ice cream layer may cause a partial melting of the ice cream layer. A similar issue will be experienced with hot sauces. The effect is comparable to a smaller heat shock for the ice cream and could lead to the appearance of larger ice crystals and a gritty texture of the final product and layers of chocolate and sauce not well defined.

In addition, if the layers of sauces are too thick they will not remain in shape: they would solidify slowly due to slow heat transfer and deform under the weight of the upper layers and possible contact may not be avoided. Similarly, if the layers of sauces are too thin, the layer shape may not be obtained and lumps of products could form at the outlet of the filling nozzle, leading to an un-esthetic product.

Managing the thickness of the layers and the viscosity of the sauce and chocolate have been found to be key to getting well define layers in the product.

In a second aspect, the invention relates to a method for making a layered frozen confection as above described, the method comprising the steps of
providing the sauce, chocolate and frozen confection,
providing a dosing nozzle with outlets for the sauce, the chocolate and the frozen confection,
dosing the sauce, chocolate and frozen confection simultaneously through respective outlets of the apparatus into a container, while the nozzle and the container are rotated with respect to each other.

### Brief description of the figure

Fig. 1 a photo showing a top view of an ice cream cone where a chocolate layer and a red fruit sauce layer have been incorporated according to the present invention to obtain this specific food design.
Fig. 2 shows a side view of the product in Fig. 1.
Fig. 3 is a photo showing a product where the temperature and viscosity of the dosed chocolate and sauce result in a product without good shape stability or design.
Fig. 4 is a photo showing a top view of a product where the temperature and viscosity of the dosed chocolate and sauce result in a product with good shape stability or design.

### Detailed description of the invention

According to the present invention a multiple layered frozen confectionery product with good shape stability and well defined layers of multiple components are provided.

By a sauce is meant edible liquid or semi-liquid mix. Examples of sauces are: fruit sauce, soft gel, nut preparation, caramel etc. The sauce can include particles or pieces. A fruit sauce may e.g. be an aqueous fruit composition containing pieces of fruit in water. The sauce formulation may contain fat.

According to the invention the sauce layer has a viscosity of between 1.5 and 1.7 Pa.s at a temperature below +47°C. Preferably the sauce layer has a viscosity of between 1.5 and 1.7 Pa.s, more preferably of 1.58 Pa.s at a temperature below +47°C. Is has been found that at viscosities above this values the sauce will need to be heated too much to reduce the viscosity which may destroy the quality of the sauce and soften the ice cream with the effects as discussed above. Below these values the sauce becomes too runny and is difficult to handle because the sauce drops in an irregular manner and the desired design of the sauce layer is not achieved.

It should be noted that, where nothing else is specified, the term "chocolate" used in the present application should comprise any composition similar to a recipe containing cocoa or chocolate which can form crunchy layers in an ice cream product. In a particular embodiment of the invention by chocolate is meant an edible food confection made of a mixture of cacao powder, cocoa butter and sugar. It can contain a certain amount of spices as vanilla or other vegetable fats according to local legislation.

By frozen confection is meant in the context of the invention include both aerated confections and non-aerated confections to be consumed in a frozen state or semi frozen state. Non limiting examples of frozen confections considered in the context of the invention include ice cream, sorbet, sherbet, frozen yogurt, gelato and mellorine.

The viscosities of the sauces according to the invention is measure as follows: The method for determining the viscosity of the sauce consists done by means of a rotational Rheometer (Anto Paar physica MCR 300) and a Pelletier oven. In the method a shear rate of 100s-1 is applied upon a rage of temperature from 10 to 45°C in the Rheometer (Anto Paar physica MCR 300) equipped with a plan measuring system and Pelletier oven, connected to a water bath with temperature control system. A volume of 0,8 ml of the sauce, without any pretreatment, is placed on the plate and the geometry CP.50 is installed. Then, the Pelletier oven is closed and the software is initiated to start the measurements as specified below.

In the present context the viscosity is measure as follows: For the Red fruit sauce, viscometer Anton Paar is used with a geometry CP.50; Temperature from 10-35°C, viscosity in function or shear rate 100s-1 from 10-35°C in 10 min and then, at 10 °C in 5 min.

For the other sauces, viscometer Anton Paar is used, with a geometry CP.50; Temperature from 20-45°C, viscosity in function or shear rate 100s-1 from 20-45°C in 10 min, and then at 20 °C in 5 min.

In a preferred embodiment of the invention it is preferred that the viscosity of the sauce is at a temperature below +47°C and above +4°C to get a good processability of the sauce.

Further in the present context unless otherwise indicated % of a component means the % of weight based on the weight of the creamer composition, i.e. weight/weight %.

If the sauces are too liquid then they would flow beyond the edge of the product and down the sides of the product on the other hand the sauces need to be fluid in order to create a nice regular decoration, but also to solidify quickly to avoid flowing beyond. With the sauce and chocolate viscosity according to the invention for a particular thickness of the layers a proper heat transfer is obtained while avoiding texture and esthetic issues.

For cones, the precision and regularity of the decoration is important. It has been found that the follow parameters provide desirable product precision and regular shapes.

According to the invention the chocolate layer has a thickness of 0.5 mm to 3 mm. Below 0.5 mm a precise layers are difficult to achieve and lumps of chocolate will form. Moreover the crunchy texture of the chocolate layer which is an important parameter for the consumer requires a minimum thickness of the chocolate layer. Above 3 mm thickness a crystallization of the chocolate is hindered because of delayed heat transfer and lead to irregular shapes and thickness of the layer.

According to the invention the sauce layer has a thickness from 0.5 mm up to 3 mm. Below 0.5 mm precise layers cannot be achieve and lumps of sauce will form. Above 3 mm the sauce does not crystallize but cools down to a solid state. This process is slower than the chocolate crystallization. The thicker the layer the longer it will take to get a solid texture. As long as the solid state is not reached this layer could deform under the pressure of the upper layer and the final shape of the product would not be regular.

In a preferred embodiment of the invention the sauce is a fruit sauce with a 42 Brix°, moisture of 57 g/100g, pH 3.5 and density of 0.00119 g/cm3 (at 20°C).

Further according to the invention the ice cream layer has a thickness above 3 mm. Below 3 mm the frozen confectionary layer is not thick enough to ensure proper heat transfer for the cooling of the sauce layer. This leads to micro heat shock in the ice cream matrix. It is preferred that the frozen confection is below 7.0 mm. This provides the possibility of decorations with many layers.

The width of the sauces layers may vary depending on the product design or pattern of chocolate and sauce wanted. In one embodiment of the invention the chocolate layer is 3mm wide and 0.5 mm thick and the fruit sauce layer is 5 mm wide and 0.8 mm thick.

For premium ice cream cones, the precision and regularity of the layers are important. A regularity of the layers of less 50%, preferably less than 20%, more preferably less than 10% of variation in the thickness of a layer if the decoration can be obtained with the present invention. Furthermore, a precision in form of a continuous layer may be obtained. To obtain this it is preferred that the viscosities of the sauce and the chocolate are the same when applied onto the ice cream.

In one embodiment of the invention the layered frozen confection has the aerated frozen confection has a helically layered structure formed by at least two visually different types of aerated frozen confection alternating with chocolate layers or the sauce layers.

In a preferred embodiment of the invention, the layers of chocolate and/or sauce are from 2 to 6 mm wide, more preferably from 3 to 5 mm wide.

For a nice presentation of the layered frozen confection, in particular for layered ice cream cone topping, it is preferred that the aerated frozen confection and the chocolate layers and/or the sauce layer end in a spiral top.

In a preferred embodiment of the invention the layered frozen confection comprises a container, more preferably an edible container, most preferable a wafer cone. In this embodiment the layered frozen confection may comprise a part of the frozen confection which is non-layered frozen confection and another part which is a layered frozen confection. This part is typically the decoration or top part of the frozen confection in the wafer cone.

### EXAMPLES

By way of example and not limitation, the following examples are illustrative of various embodiments of the present disclosure.

### Ice cream

Ice creams used in the present invention were vanilla or panna flavored; they had the following compositions (% in weight):
Fat 4 to 6 %
Carbohydrates: 27 to 35%
Hydrocolloids: 0,3 to 0,45%
Milk solids nonfat: 8 to 11 %
Proteins: 1,5 to 3 %
Fibers: 0,1 to 0,5%

Other characteristics:
Energy: 176 Kcal
Overrun: 110 %

### Sauces

Caramel sauce: Sugar 20% to 22%, dry matter 80g to 90g for 100g of caramel sauce, moisture 15 to 20 g for 100g of caramel sauce.
Red fruit sauce: Moisture 50 to 60 g for 100g of sauce, pH between 3 and 4, density around 0,0012 g /cm3 at 20°C, Brix index around 42°

### Container

Wafer cone containers have a 98 mL volume and may be chocolate coated. Tub containers typically have a 440 mL volume.

### Dosing nozzle

The preparation of the product according to the invention may be made by means of a dosing nozzle which is a vertical extrusion nozzle comprising two ice-cream passages with for each passage an inlet port and an outlet port, and two sauces passages with for each passage an inlet port and an outlet port. The outlet ports have elongated cross-sections, and the sauces ports extend next to ice cream ports in parallel thereto, so that each sauce stripe is "painted" on the ice cream strip which is extruded. When the nozzle and the container are rotated with respect to each other, annular or helical sauces layers separated by ice cream layers are formed. Such types of nozzles are for example disclosed in patent application WO 2011/086058.

In a preferred embodiment of the invention the product is made according to the herein described method, wherein the dosing device outlets are outlet ports of elongated cross-sections, and wherein the chocolate outlet port extends in parallel to a frozen confection outlet port and the sauce outlet port extends in parallel to a frozen confection outlet port so as to form an annular or helical chocolate layer upon rotation of the nozzle relative to the container. This allows high precision product layering and a well-defined shape to be obtained.

### Example 1 Cones

Bottom of the wafer cone container is filled with 12 g of vanilla flavored ice cream. Decoration is composed of two layers of panna ice cream (30 g total), 3 g of chocolate sauce and 3 g of red fruit sauce. Each of the layers is continuous and has a helical shape. Ice cream layers are 3 to 4 mm thick. Ice cream layers extend from the center to the outer edge of the cone.

The chocolate layer is 0.5 mm thick and 3 mm wide. The red fruit sauce layer is 0.8 mm thick and 5 mm wide. Both Chocolate and red fruit sauces layers are applied on the outer edge of the cone. The total volume of the cone with the layered decoration is 110 mL.

Implementation of the sauces was done at a temperature of about +20°C for the Red fruit sauce and about +45°C for the chocolate. The viscosities of the sauce were 1.58 (Pa.s) and 1.2 Pa.s for the chocolate at these temperatures.

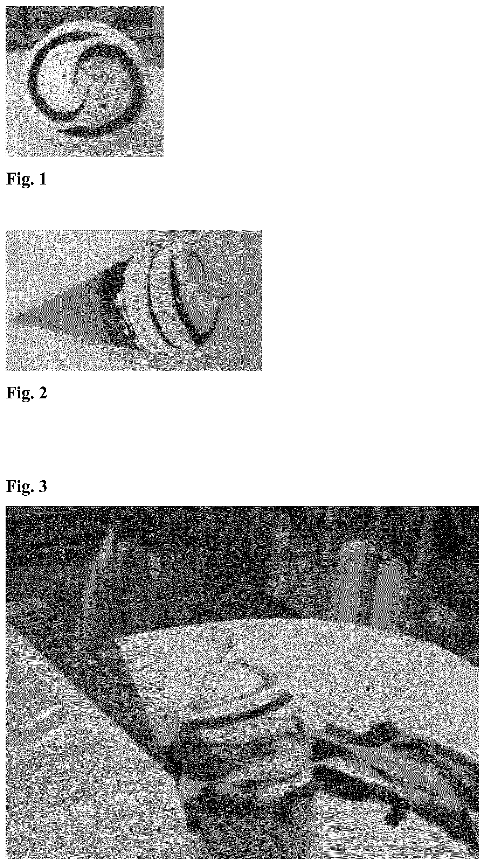

Pictures of cones obtained according to this example are shown in Figs. 1 and 2.

### Example 2 Tubs

Tub container is filled from bottom to top with the layered decoration. The decoration is composed of a vanilla ice cream layer (150 g) and a hazelnut ice cream layer (150 g), 45 g of chocolate sauce and 45 g of caramel sauce. Each of the layers is continuous, has a helical shape and extends from the center to the outer edge of the tub. Ice cream layers are 7 mm thick and the caramel sauce layer is 1 to 3 mm thick.

Dosing of the sauces was done at a temperature of about +42°C for the caramel sauce and about +45°C for the chocolate. Viscosities of the sauces were about 1.2 (Pa.s) at these temperatures.

### Example 3 Cones / Comparative Example

Product samples were made according to the following specification: The bottom of the wafer cone container is filled with 12 g of vanilla flavored ice cream. The decoration is composed of two layers of panna ice cream (30 g total), 3 g of chocolate sauce and 3 g of caramel sauce. Each of the layers is continuous and has a helical shape. The ice cream layers are 3 to 4 mm thick. Ice cream layers extend from the center to the outer edge of the cone. The chocolate layer is 0.5 mm thick and 3 mm wide. The caramel sauce layer is 0.8 mm thick and 5 mm wide. Both chocolate and caramel sauces layers are applied on the outer edge of the cone. The total volume of the cone with the layered decoration is 110 mL.

### Sample A

Implementation of the sauces was done at a temperature of about +45°C for the caramel sauce and about +47°C for the chocolate. Temperature was too high therefore the sauces were too fluid and proper layered décor were not achieved. Picture of cones obtained according to this example is shown in Fig. 3.

### Sample B

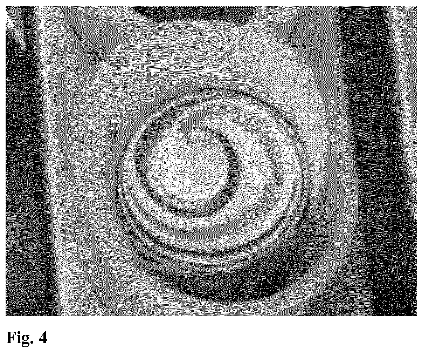

Implementation of the sauces was done at a temperature of about +42°C for the caramel sauce and about +45°C for the chocolate. Picture of cones obtained according to this example is shown in Fig. 4.

## Claims

1. A layered frozen confectionery product comprising at least one a layer of frozen confection, at least one layer of chocolate and at least one layer of sauce wherein
the sauce in the sauce layer has a viscosity of between 1.5 and 1.7 Pa.s and is present in the frozen confectionery at a thickness of 0.5 to 3.0 mm,
the chocolate in the chocolate layer has a viscosity of between 1.0 and 1.4 Pa.s at a temperature of +45°C and is present in the frozen confectionery at a thickness of 0.5 to 3.0 mm, and
the frozen confection layer has a thickness of between 3.0 and 7.0 mm and an overrun between 80 and 200 and is positioned between the chocolate and sauce layer,- and wherein the frozen confection, sauce and chocolate layers form substantially helical layers, and
wherein the sauce is a red fruit sauce and the viscosity of the red fruit sauce is measured with an Anton Paar viscometer with a geometry CP.50; at a temperature from 10 to 35 °C.

2. A layered frozen confection according to the preceding claim, wherein at least two of the layers extending to the edge of the layered frozen confection.

3. A layered frozen confection according to any of the preceding claims, wherein at least two of the layers extend to the circumference edge of the frozen confection.

4. A layered frozen confection according to any of the preceding claims, wherein the aerated frozen confection has a helically layered structure formed by at least two visually different types of aerated frozen confection alternating with chocolate layers or the sauce layers.

5. A layered frozen confection according to any of the preceding claims, and wherein the aerated frozen confection and the chocolate layers or the sauce layer end in a spiral top.

6. A layered frozen confection according to any of the preceding claims, wherein the layers of chocolate and/or sauce are from 2 to 6 mm wide.

7. A layered frozen confection according to any of the preceding claims, wherein the frozen confection comprises an edible container, preferably a wafer cone.

8. A method for making a layered frozen confection according to any of the preceding claims, the method comprising the steps of
providing the sauce, chocolate and frozen confection,
providing a dosing nozzle with outlets for the sauce, the chocolate and the frozen confection,
dosing the sauce, chocolate and frozen confection simultaneously through respective outlets of the apparatus into a container, while the nozzle and the container are rotated with respect to each other.

9. A method according to claim 8, wherein the dosing device outlets are outlet ports of elongated cross-sections, and wherein the chocolate outlet port extends in parallel to a frozen confection outlet port and the sauce outlet port extends in parallel to a frozen confection outlet port so as to form an annular or helical chocolate layer upon rotation of the nozzle relative to the container.

10. A method according to claims 8 and 9, wherein the viscosities of the sauce and the chocolate are the same when applied onto the frozen confection.

## Patentansprüche

1. Geschichtetes gefrorenes Süßwarenprodukt, umfassend mindestens eine Schicht eines gefrorenen Konfekts, mindestens eine Schicht Schokolade und mindestens eine Schicht Soße, wobei
die Soße in der Soßenschicht eine Viskosität zwischen 1,5 und 1,7 Pa.s aufweist und in der gefrorenen Süßware in einer Dicke von 0,5 bis 3,0 mm vorliegt,
die Schokolade in der Schokoladenschicht bei einer Temperatur von +45 °C eine Viskosität zwischen 1,0 und 1,4 Pa.s aufweist und in der gefrorenen Süßware in einer Dicke von 0,5 bis 3,0 mm vorliegt, und
die gefrorene Konfektschicht eine Dicke zwischen 3,0 und 7,0 mm und einen Überschuss zwischen 80 und 200 aufweist und zwischen der Schokoladen- und der Soßenschicht positioniert ist und wobei die gefrorene Konfekt-, die Soßen- und die Schokoladenschicht im Wesentlichen spiralförmige Schichten bilden, und
wobei die Soße eine rote Fruchtsoße ist und die Viskosität der roten Fruchtsoße mit einem Anton-Paar-Viskosimeter mit einer Geometrie CP.50 bei einer Temperatur von 10 bis 35 °C gemessen wird.

2. Geschichtetes gefrorenes Konfekt nach dem vorstehenden Anspruch,
wobei sich mindestens zwei der Schichten zum Rand des geschichteten gefrorenen Konfekts erstrecken.

3. Geschichtetes gefrorenes Konfekt nach einem der vorstehenden Ansprüche, wobei sich mindestens zwei der Schichten zum Umfangsrand des gefrorenen Konfekts erstrecken.

4. Geschichtetes gefrorenes Konfekt nach einem der vorstehenden Ansprüche, wobei das mit Luft versetzte gefrorene Konfekt eine spiralförmig geschichtete Struktur aufweist, die durch mindestens zwei optisch unterschiedliche Arten von mit Luft versetztem gefrorenem Konfekt gebildet ist, die sich mit Schokoladenschichten oder den Soßenschichten abwechseln.

5. Geschichtetes gefrorenes Konfekt nach einem der vorstehenden Ansprüche und wobei das mit Luft versetzte gefrorene Konfekt und die Schokoladenschichten oder die Soßenschicht in einer spiralförmigen Oberseite enden.

6. Geschichtetes gefrorenes Konfekt nach einem der vorstehenden Ansprüche, wobei die Schichten aus Schokolade und/oder Soße von 2 bis 6 mm breit sind.

7. Geschichtetes gefrorenes Konfekt nach einem der vorstehenden Ansprüche, wobei das gefrorene Konfekt einen essbaren Behälter, vorzugsweise einen Waffelkegel, umfasst.

8. Verfahren zum Herstellen eines geschichteten gefrorenen Konfekts nach einem der vorstehenden Ansprüche, wobei das Verfahren die Schritte umfasst
Bereitstellen der Soße, der Schokolade und des gefrorenen Konfekts,
Bereitstellen einer Dosierdüse mit Auslässen für die Soße, die Schokolade und das gefrorene Konfekt,
Dosieren der Soße, der Schokolade und des gefrorenen Konfekts gleichzeitig durch jeweilige Auslässe der Vorrichtung in einen Behälter, während die Düse und der Behälter in Bezug zueinander gedreht werden.

9. Verfahren nach Anspruch 8, wobei die Dosiervorrichtungsauslässe Auslassöffnungen mit länglichen Querschnitten sind und wobei sich die Schokoladenauslassöffnung parallel zu einer Auslassöffnung für gefrorenes Konfekt erstreckt und sich die Soßenauslassöffnung parallel zu einer Auslassöffnung für gefrorenes Konfekt erstreckt, um bei Drehung der Düse relativ zum Behälter eine ringförmige oder spiralförmige Schokoladenschicht zu bilden.

10. Verfahren nach den Ansprüchen 8 und 9, wobei die Viskositäten der Soße und der Schokolade dieselben sind, wenn sie auf das gefrorene Konfekt aufgetragen werden.

## Revendications

1. Produit de confiserie congelée en couches comprenant au moins une une couche de confiserie congelée, au moins une couche de chocolat et au moins une couche de sauce dans lequel
la sauce dans la couche de sauce a une viscosité entre 1,5 et 1,7 Pa.s et est présente dans la confiserie congelée à une épaisseur de 0,5 à 3,0 mm,
le chocolat dans la couche de chocolat a une viscosité entre 1,0 et 1,4 Pa.s à une température de +45 °C et est présent dans la confiserie congelée à une épaisseur de 0,5 à 3,0 mm, et
la couche de confiserie congelée a une épaisseur entre 3,0 et 7,0 mm et un dépassement entre 80 et 200 et est positionnée entre la couche de chocolat et de sauce,- et dans lequel les couches de confiserie congelée, de sauce et de chocolat forment des couches sensiblement hélicoïdales, et
dans lequel la sauce est une sauce aux fruits rouges et la viscosité de la sauce aux fruits rouges est mesurée avec un viscosimètre Anton Paar avec une géométrie CP.50 ; à une température de 10 à 35 °C.

2. Confiserie congelée en couches selon la revendication précédente,
dans laquelle au moins deux des couches s'étendant jusqu'au bord de la confiserie congelée en couches.

3. Confiserie congelée en couches selon l'une quelconque des revendications précédentes, dans laquelle au moins deux des couches s'étendent jusqu'au bord de circonférence de la confiserie congelée.

4. Confiserie congelée en couches selon l'une quelconque des revendications précédentes, dans laquelle la confiserie congelée aérée a une structure hélicoïdalement en couches formée d'au moins deux types visuellement différents de confiserie congelée aérée alternant avec des couches de chocolat ou les couches de sauce.

5. Confiserie congelée en couches selon l'une quelconque des revendications précédentes, et dans laquelle la confiserie congelée aérée et les couches de chocolat ou la couche de sauce terminent en un sommet en spirale.

6. Confiserie congelée en couches selon l'une quelconque des revendications précédentes, dans laquelle les couches de chocolat et/ou de sauce ont une largeur de 2 à 6 mm.

7. Confiserie congelée en couches selon l'une quelconque des revendications précédentes, dans laquelle la confiserie congelée comprend un récipient comestible, de préférence un cône en gaufrette.

8. Procédé de fabrication d'une confiserie congelée en couches selon l'une quelconque des revendications précédentes, le procédé comprenant les étapes consistant à
fournir la sauce, le chocolat et la confiserie congelée,
fournir une buse de dosage avec des sorties pour la sauce, le chocolat et la confiserie congelée,
doser la sauce, le chocolat et la confiserie congelée simultanément à travers des sorties respectives de l'appareil dans un récipient, tandis que la buse et le récipient sont mis en rotation l'un par rapport à l'autre.

9. Procédé selon la revendication 8, dans lequel les sorties du dispositif de dosage sont des orifices de sortie de sections transversales allongées, et dans lequel l'orifice de sortie de chocolat s'étend parallèlement à un orifice de sortie de confiserie congelée et l'orifice de sortie de sauce s'étend parallèlement à un orifice de sortie de confiserie congelée de sorte à former une couche de chocolat annulaire ou hélicoïdale lors de la rotation de la buse relativement au récipient.

10. Procédé selon les revendications 8 et 9, dans lequel les viscosités de la sauce et du chocolat sont les mêmes lorsqu'ils sont appliqués sur la confiserie congelée.
